# DEMANDE DE BREVET EUROPEEN

(11) **EP 0 758 812 A1**
(43) Date de publication de la demande: **19.02.1997**
(21) Numéro de dépôt: 96401752.9
(22) Date de dépôt: 08.08.1996
(51) Int. Cl.: H02J 7/00

(54) **Batterie comportant plusieurs éléments, notamment de technologie lithium-ion, en série**

(30) Priorité: 11.08.1995 FR 9509764
(71) Demandeur: ALCATEL MOBILE PHONES, 75015 Paris (FR)
(72) Inventeur: Abiven, Benoît, 92600 Asnieres (FR)
(74) Mandataire: El Manouni, Josiane

(57) **Abrégé**

Batterie comportant plusieurs éléments (1,2), notamment de technologie lithium-ion, en série, et présentant deux contacts (3, 4) de raccordement extérieur,
caractérisée en ce qu'elle comporte en outre, entre chacun desdits éléments, dans le circuit électrique qui les relie, un interrupteur (5) destiné à être ouvert en cas de charge de cette batterie, et fermé en cas de décharge de cette batterie, et en ce que, lesdits contacts de raccordement extérieur étant dits contacts de charge/décharge, elle présente en outre, de part et d'autre de chacun de ces interrupteurs, (6, 7), de raccordement extérieur un contact dit de charge permettant le raccordement à un circuit de charge (8, 9) distinct pour chacun desdits éléments, chacun desdits contacts (3, 4) de charge/décharge servant en outre de contact de charge pour l'élément (1, 2) qui lui est directement relié.

## Description

La présente invention concerne une batterie, et plus particulièrement une batterie comportant plusieurs éléments, notamment de technologie dite lithium-ion, en série.

La présente invention s'intéresse plus précisément à la charge d'une telle batterie.

Si, comme on le fait habituellement, on charge une telle batterie au moyen d'un circuit de charge unique, raccordé aux contacts de raccordement extérieur de cette batterie, et si, comme c'est habituellement le cas, lesdits éléments ne sont pas parfaitement identiques, l'un de ces éléments risque de se charger plus rapidement que les autres et donc, notamment dans le cas de technologie lithium-ion, d'être détérioré si l'on continue la charge alors que les autres éléments n'ont pas atteint leur charge maximale.

Pour éviter ceci, on prévoit en général un système électronique de surveillance permettant, dès que la tension aux bornes de l'un de ces éléments commence à s'élever par rapport à la tension aux bornes des autres éléments, de limiter le courant de charge de cet élément, de façon à éviter une détérioration de cet élément.

Une telle solution a notamment pour inconvénient d'être relativement complexe et coûteuse.

La présente invention a notamment pour but d'éviter cet inconvénient.

La présente invention a ainsi pour objet une batterie comportant plusieurs éléments, notamment de technologie lithium-ion, en série, et présentant deux contacts de raccordement extérieur, cette batterie étant essentiellement caractérisée en ce qu'elle comporte en outre, entre chacun desdits éléments, dans le circuit électrique qui les relie, un interrupteur destiné à être ouvert en cas de charge de cette batterie, et fermé en cas de décharge de cette 35 batterie et en ce que, lesdits contacts de raccordement extérieur étant dits contacts de charge/décharge, elle présente en outre, de part et d'autre de chacun de ces interrupteurs, un contact de raccordement extérieur dit de charge permettant le raccordement à un circuit de charge distinct pour chacun desdits éléments, chacun desdits contacts de charge/décharge servant en outre de contact de charge pour l'élément qui lui est directement relié.

D'autres objets et caractéristiques de la présente invention apparaîtront à la lecture de la description suivante d'un exemple de réalisation, faite en relation avec les dessins ci-annexés dans lesquels :
- la figure 1 illustre schématiquement une batterie suivant l'invention à l'état de charge,
- la figure 2 illustre schématiquement une batterie suivant l'invention à l'état de décharge.

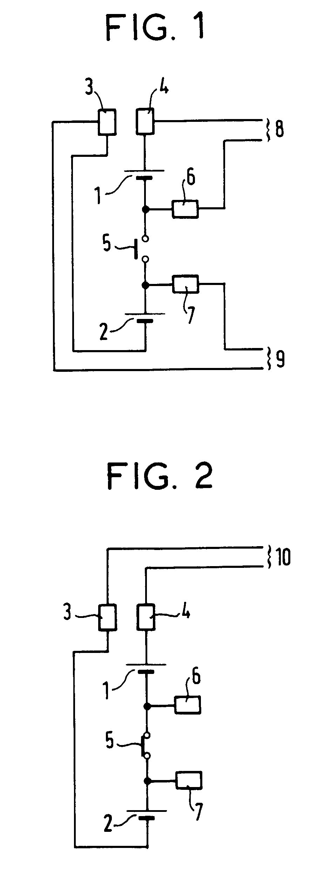

La batterie illustrée sur les figures 1 et 2 comporte à titre d'exemple deux éléments en série, 1 et 2, notamment de technologie lithium-ion.

Cette batterie présente deux contacts de raccordement extérieur dits ici de charge/décharge, 3 et 4.

Suivant l'invention, cette batterie comporte en outre, entre les éléments 1 et 2, dans le circuit électrique qui les relie, un interrupteur, 5, destiné à être ouvert (comme illustré sur la figure 1) en cas de charge de cette batterie, et fermé (comme illustré sur la figure 2) en cas 5 de décharge de cette batterie.

Egalement suivant l'invention, cette batterie présente en outre, de part et d'autre de l'interrupteur 5, un contact de raccordement extérieur dit de charge, respectivement 6 et 7, permettant le raccordement à un circuit de charge distinct, respectivement 8 et 9, pour chacun de ces éléments.

Chacun desdits contacts de charge/décharge, respectivement 3 et 4, sert de contact de décharge pour le raccordement de cette batterie à un dispositif 10 à alimenter par cette batterie, et sert en outre de contact de charge pour la charge de l'élément, respectivement 1 et 2, qui lui est directement relié.

Ainsi le circuit de charge 8 est connecté entre les contacts de charge 3 et 7, et le circuit de charge 9 est connecté entre les contacts de charge 4 et 6.

Ainsi, avec un tel montage, chaque élément étant chargé séparément, les problèmes de détérioration éventuelle d'élément évoqués plus haut sont supprimés, et ce grâce à une solution relativement simple à mettre en oeuvre et peu coûteuse.

## Revendications

1. Batterie comportant plusieurs éléments (1,2), notamment de technologie lithium-ion, en série, et présentant deux contacts (3, 4) de raccordement extérieur,
caractérisée en ce qu'elle comporte en outre, entre chacun desdits éléments, dans le circuit électrique qui les relie, un interrupteur (5) destiné à être ouvert en cas de charge de cette batterie, et fermé en cas de décharge de cette batterie, et en ce que, lesdits contacts de raccordement extérieur étant dits contacts de charge/décharge, elle présente en outre, de part et d'autre de chacun de ces interrupteurs, un contact de raccordement extérieur (6, 7) dit de charge permettant le raccordement à un circuit de charge (8, 9) distinct pour chacun desdits éléments, chacun desdits contacts (3, 4) de charge/décharge servant en outre de contact de charge pour l'élément (1, 2) qui lui est directement relié.
